**Europäisches Patentamt**

**European Patent Office**

**Office européen des brevets**

(19)

(11) **EP 1 463 297 A1**

(12) **EUROPÄISCHE PATENTANMELDUNG**

(43) Veröffentlichungstag:
29.09.2004 Patentblatt 2004/40

(51) Int Cl.⁷: $H04N\ 1/407$, $H04N\ 1/40$

(21) Anmeldenummer: 03100832.9

(22) Anmeldetag: 28.03.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Agfa-Gevaert AG**
**51373 Leverkusen (DE)**

(72) Erfinder:
• **Schuhrke, Thomas Dr.**
  **81549 München (DE)**
• **Amann, Stefan**
  **40764 Langenfeld (DE)**
• **Draber, Edgar Dr.**
  **51519 Odenthal (DE)**

(54) **Verfahren zum Belichten digitaler Bilddaten auf lichtempfindliches Material**

(57) Die Erfindung betrifft ein Verfahren zum Belichten digitaler Bilddaten auf lichtempfindliches Material. Die aufzugebenden Bilddaten werden an einer Lesestation empfangen, in einer Rechenstation wird eine Belichterkorrektur auf die Bilddaten angewandt und die belichtungskorrigierten Bilddaten werden über ein Belichtungsmodul auf das lichtempfindliche Material ausgegeben. Die Erfindung besteht darin, im Rahmen der Belichterkorrektur einen Korrekturschritt vorzusehen, der sowohl spezifisch für den Typ von verwendetem lichtempfindlichem Material ist als auch spezifisch für die Bilddaten. Durch die Kombination dieser beiden Abhängigkeiten bei der Korrektur der Bilddaten kann einer Belichtungs-Überstrahlung bei der Bildausgabe entgegengewirkt werden.

FIG. 2

EP 1 463 297 A1

**Beschreibung**

Die Erfindung betrifft ein Verfahren zum Belichten digitaler Bilddaten auf lichtempfindliches Material nach dem Oberbegriff von Anspruch 1.

Derartige Verfahren sind aus dem Bereich der Fotolabore bekannt und finden sowohl an den sogenannten Minilabs als auch an den Großlabor-Geräten Anwendung. Minilabs sind Kombigeräte, die im Allgemeinen außer einem Belichter einen Scanner zur Digitalisierung von Negativfilmen, verschiedene weitere Eingabestationen für rein digitale Bilddaten, eine Recheneinheit zur Korrektur der Bilddaten und eine Entwicklungseinheit zum Entwickeln des belichteten Fotopapiers umfassen. Großlabor-Geräte sind dagegen in der Regel Einzelgeräte, so dass der Belichter hier getrennt von Scanner, Großrechner und Entwicklungsgerät ein eigenes Gerät darstellt. Die Belichter an sich unterscheidet insbesondere die Belichtungsgeschwindigkeit und damit der Durchsatz an zu erzeugenden Fotos, das Belichtungsverfahren selbst ist bei beiden Geräten vergleichbar.

Am Belichter werden jeweils digitale Bilddaten empfangen, welche aus unterschiedlichen Quellen stammen können. Auf diese Bilddaten werden Belichterkorrekturen angewandt, um sie den Charakteristiken des jeweiligen Belichters anzupassen. Hierbei erfolgt im Allgemeinen eine Graukalibrierung, bei der die Bilddaten mit einer Kalibrierkennlinie beaufschlagt werden. Diese bewirkt, dass Bildpunkte deren Farbwert in allen drei Farben R,G und B gleich groß ist, auf dem belichteten Foto auch tatsächlich grau erscheinen. Ferner wird hierdurch der Gesamtdichteumfang, also die Differenz von minimaler und maximaler zur Verfügung stehender Dichte festgelegt, so dass die hellsten Bildpunkte tatsächlich weiß erscheinen, während die dunkelsten schwarz wiedergegeben werden.

Zur Bestimmung der Kalibrierkennlinie werden üblicherweise Grautreppen, also Testdaten, welche Grauflächen in verschiedenen Stufen darstellen, ausbelichtet, mit Densitometern ausgemessen und die dabei ermittelten Werte mit Sollwerten verglichen. Ergibt sich hierbei beispielsweise im ausgemessenen Testmuster anstelle eines neutralen Graues ein leichter Rotstich, so wird für die Belichterkorrektur der Bilddaten festgehalten, dass diese so zu verändern sind, dass die Rotwerte im Vergleich zu Grün und Blau reduziert werden. Mit den neu ermittelten Belichter-Korrekturdaten wird die Grautreppe korrigiert und erneut ausbelichtet. Diese neue Ausbelichtung wird wiederum am Densitometer vermessen und mit den Sollwerten verglichen. Hat sich das Resultat nach der Korrektur bereits verbessert, ist aber noch nicht zufriedenstellend, so wird dieser Zyklus erneut durchlaufen, bis ein befriedigendes Graubild entsteht. Die Korrekturwerte, welche angewandt werden mussten, um dieses gewünschte Graubild zu erzielen, werden nun festgehalten und im Folgenden auf alle auszubelichtenden Bilddaten bei dieser Kombination aus Belichter und lichtempfindlichem Material angewandt.

Trotz dieser Belichterkorrektur hat sich jedoch gezeigt, dass es bei der Belichtung beispielsweise von feinen weißen Schriften auf dunklem Grund zu ungewünschten Erscheinungen kommen kann. So können diese Schriften im schlimmsten Fall als verwaschene grau-schwarze Fläche und somit völlig unleserlich erscheinen.

Aufgabe der Erfindung war es deshalb, ein Verfahren zum Belichten digitaler Bilddaten so auszugestalten, dass ein Verwaschen des Bildinhalts bei der Belichtung verhindert wird.

Gelöst wird diese Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß werden die am Belichter auszugebenden, digitalen Bilddaten vor dem Belichten einem Korrekturschritt unterzogen, bei dem sowohl bilddatenspezifische als auch für das lichtempfindliche Ausgabematerial spezifische Korrekturdaten verwendet werden. Nur die Kombination von bilddaten- und papierspezifischen Korrekturdaten führt zu einem geeigneten Ergebnis. Es hat sich gezeigt, dass die unerwünschten Verwaschungen, insbesondere bei Laserbelichtern, von Überstrahlungen herrühren die besonders bei bestimmten Papiersorten beim Aufbelichten sehr dichter Bildinformationen an den Übergängen zu weißen Bildstellen auftreten. Bei der Belichtung wird in diesem Fall eine Dichtestufe nicht als scharfe Kante wiedergegeben, statt dessen wird der dichte Bereich überstrahlt, d.h. der auf der Wiedergabe dunkel erscheinende Bildinhalt erstreckt sich bis in den hellen Nachbarbereich hinein. Diesem Phänomen wird erfindungsgemäß so begegnet, dass die Bilddaten vor der Belichtung so manipuliert werden, dass der Überstrahlung entgegen gewirkt wird. Vor der Belichtung der Bilddaten wird die in etwa zu erwartende Überstrahlung für festgelegte Dichtestufen bestimmt. Dann werden die zu belichtenden Bilddaten bei entsprechenden Dichtestufen um diese zu erwartende Überstrahlung bzw. einen Anteil derselben reduziert, so dass sich aus der Summe von korrigierten Bilddaten und bei der Belichtung erfolgter Überstrahlung im Ergebnis annähernd ein Abbild der ursprünglichen Bilddaten ergibt.

Da herausgefunden wurde, dass diese Überstrahlung abhängig von Höhe und Absolutwert der jeweiligen Dichtestufe im Bildinhalt ist, an der sie auftritt, und auch von den Eigenschaften des verwendeten, lichtempfindlichen Materials, werden die Korrekturdaten bilddaten- und materialabhängig bestimmt. Vorteilhaft an diesem Verfahren ist, dass die maximalen Schwärzungsdichten bei der Belichtung so gewählt werden können, dass sich auf dem belichteten Bild tatsächlich ein wirkliches Schwarz ergibt ohne dass dabei zu starke Überstrahlungen auftreten.

Auch ein Herabsetzen der Maximaldichte würde nämlich das Problem der Überstrahlung zumindest reduzieren, allerdings zu Ungunsten der maximalen Schwärzungsdichte.

Besonders vorteilhaft ist es, diese Überstrahlungskorrektur auf die ausgabefertigen Bilddaten anzuwenden. Erst wenn die Bilddaten bereits alle Bildbearbeitungsund Korrekturschritte durchlaufen haben und ausgabefertig sind, stehen die Dichtestufen zur Verfügung, welche auch tatsächlich für die Überstrahlung verantwortlich sind. Nur eine Korrektur auf Basis der ausgabefertigen Bilddaten erlaubt es also, den tatsächlich entstehenden Fehler vorweg zu berechnen und zu berücksichtigen. Würde man dagegen die Überstrahlungskorrektur bereits im Zuge beispielsweise einer Verschärfung vornehmen, so würde man als Bezugsgröße Dichtestufen verwenden, welche im Folgenden noch verändert werden. Dies würde zwar den Rechenaufwand erheblich einschränken, es könnte allerdings zu einer Beeinträchtigung der Korrekturqualität kommen.

Vorteilhafterweise wird die Überstrahlungskorrektur für jede Bildfarbe einzeln vorgenommen. Die Bildinhalte und damit die Dichteunterschiede können beispielsweise in Blau völlig anders sein als in Rot. Dem wird durch eine farbspezifische Überstrahlungskorrektur Rechnung getragen.

Vorteilhafterweise werden zur Bestimmung der bilddatenspezifischen Korrekturdaten die hoch aufgelösten Bilddaten, des zu korrigierenden Bildes, analysiert. Eine mögliche vorteilhafte Analyseform ist ein Kantendetektionsverfahren. Anhand dieses Verfahrens werden Dichtestufen ermittelt, an denen Überstrahlungen auftreten können und somit eine Korrektur vorgenommen werden soll. Vorzugsweise werden dabei Lage und Höhe von Dichtestufen festgehalten.

Eine weitere besonders vorteilhafte, einfache Analysemethode zur Ermittlung der bilddatenspezifischen Korrekturdaten stellt eine Filterung der Bilddaten dar. Hierfür können beliebige, geeignete Filter verwendet werden. Besonders vorteilhaft ist es jedoch, ein zweidimensionales Filter zu verwenden, bei dem sowohl Dichtestufen in x- als auch in y-Richtung gleichermaßen berücksichtigt werden. Die Verwendung von zweidimensionalen Filtern ist jedoch relativ rechenaufwändig, so dass es auch vorteilhaft sein kann nacheinander eindimensional in x- und in y-Richtung zu filtern, um Kapazität einzusparen. Hierbei kann es jedoch zu Problemen an Eckpunkten abknickender Kanten im Bild kommen.

In einer vorteilhaften Ausführungsform des Verfahrens wird ein Filter mit einer Reichweite von fünf Bildpunkten verwendet. Damit ist es möglich auch Überstrahlungen zu korrigieren, die sich über mehr als einen Bildpunkt außerhalb der Dichtestufe erstrecken. Schmalere Filter würden sich bei so breiten Überstrahlungen als problematisch erweisen, wohingegen weitere Filter unnötig Rechenkapazität beanspruchen würden. So stellt ein Filter mit einer Reichweite von fünf Bildpunkten einen optimalen Kompromiss dar. Steht jedoch beliebig viel Rechenkapazität zur Verfügung, kann ein weiterer Filter noch vorteilhafter sein.

Diese bildspezifischen Korrekturdaten, welche für jedes zu korrigierende Bild neu ermittelt werden müssen, werden kombiniert mit belichtungsspezifischen Korrekturdaten, welche abhängig vom Belichter und vom verwendeten lichtempfindlichen Material sind. Letztere ändern sich jeweils mit der Wahl eines neuen Fotopapiers und sollten deshalb vorteilhafterweise als papierspezifische Korrekturdaten jeweils beim Einlegen eines neuen Fotopapiers am Gerät neu bestimmt werden. Dies geschieht vorteilhafterweise anhand eines Kalibriervorgangs. Bei diesem wird ein vorgegebenes Testmuster auf das neue lichtempfindliche Material belichtet und nach der Entwicklung am Densitometer vermessen. Das Testmuster ist vorteilhafterweise so beschaffen, dass es als Maß für die Überstrahlung beim Belichten dienen kann. Die am Densitometer gemessenen Werte, welche somit die Überstrahlung spezifizieren, werden am Gerät eingegeben, bzw. von einem eventuellen geräteinternen Densitometer an eine Recheneinheit übergeben. In der Recheneinheit werden aus diesen, für das aktuelle, lichtempfindliche Material ermittelten, Werten die papierspezifischen Korrekturdaten gebildet.

Vorteilhafterweise werden zur Bestimmung der papierspezifischen Korrekturdaten Testmuster verwendet, welche eine Vielzahl von aufeinander folgenden Dichtestufen bzw. Dichtesprüngen aufweisen. Hier eignen sich alle Varianten von Schwarz-Weiß- oder Graulinien-Mustern. Wichtig ist, dass im Testmuster unterschiedlich hohe Dichtestufen vertreten sind, wobei diese idealerweise jeweils noch von unterschiedlichen Basiswerten ausgehen, da es sich gezeigt hat, dass bei gleich hohen Dichtestufen jeweils eine andere Überstrahlung resultieren kann, wenn diese in unterschiedlichen Dichtebereichen liegen.

Das Ausmessen der aufbelichteten und entwickelten Testmuster kann mit einem Microdensitometer erfolgen. Diese Geräte sind jedoch sehr teuer, so dass es vorteilhafter ist, die Testmuster so anzulegen, dass die Überstrahlung anhand einer integralen Messung des aufbelichteten Testmusters möglich ist. Ein Beispiel hierfür wird in der Figurenbeschreibung gegeben.

Ist die tatsächliche, bei der aktuellen Belichtung auftretende Überstrahlung bekannt, so kann diese mit der festzulegenden, maximal zulässigen Überstrahlung in Beziehung gesetzt werden. Aus diesem Vergleich ergeben sich die papierspezifischen Korrekturdaten als Maß dafür, um wieviel die gemessene Überstrahlung zu reduzieren ist, um zu der maximal zulässigen, gewünschten Überstrahlung zu gelangen. Dabei ist es vorteilhaft, die Überstrahlung als Funktion der Dichte zu betrachten. Sie kann aber auch als Funktion des Dichteunterschiedes oder als zweidimensionale Funktion abhängig von Basisdichte und Dichteunterschied dargestellt werden.

Besonders vorteilhaft kann die Korrektur ausgeführt werden, wenn die papierspezifischen Korrekturdaten für jeden neu verwendeten Typ von lichtempfindlichem Material ermittelt werden. Dies kann dadurch geschehen, dass der Benutzer der Belichtungsgeräts jeweils bei der Wahl eines neuen Papiertyps diese Kalibriermaßnahme vornimmt. Vorteilhafterweise kann die Bestimmung der papierspezifischen Korrekturdaten aber auch automatisch im Belichter vorgenommen werden. Zu diesem Zweck weist der Belichter ein Densitometer auf oder steht mit einem solchen in Verbindung, dem das belichtete Testmuster nach der Entwicklung automatisch zugeführt wird. Die an dem Densitometer ermittelten Daten werden automatisch an den Belichter übermittelt, an dem dann daraus die papierspezifischen Korrekturdaten bestimmt werden.

Eine weitere vorteilhafte Möglichkeit zur Bestimmung der papierspezifischen Korrekturdaten besteht darin, diese bereits bei der Inbetriebnahme des Geräts, zumindest für die wichtigsten Typen von lichtempfindlichem Material, bei festgelegten Maximaldichten vorzubestimmen und abzulegen. In diesem Fall muss der Benutzer nur den Papiertyp eingeben, bzw. dieser wird vom Gerät erkannt, dann sucht der Beliebter die hierfür passenden, vorabgelegten papierspezifischen Korrekturdaten und führt die Belichterkorrektur anhand dieser aus. Vorteil dieser Variante ist, dass der Benutzer bei der Wahl eines neuen Papiertyps keine Kalibrierung durchführen muss, nachteilig ist jedoch, dass neue Papiertypen hierbei nicht berücksichtigt werden können.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:

Fig. 1 schematische Darstellung eines Belichters für digitale Bilddaten,

Fig. 2 schematische Darstellungen einer Dichtestufe anhand von Bilddaten und belichtetem Bild ohne und mit erfindungsgemäßer Korrektur,

Fig. 3 eine schematische Darstellung des Dichteverlaufs eines Testmusters entlang einer Dimension,

Fig. 4 die Abhängigkeit der Überstrahlung von der Dichte,

Fig. 5 den Zusammenhang zwischen unkorrigierten und korrigierten, ausgabefertigen Bilddaten und

Fig. 6 eine papierspezifische Korrekturkennlinie.

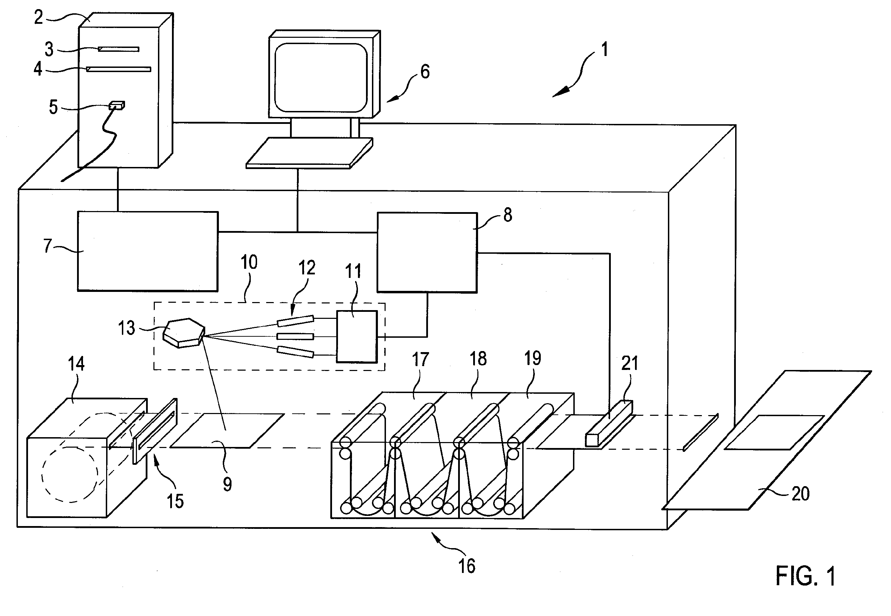

Figur 1 zeigt schematisch einen Beliebter 1 zum Belichten digitaler Bilddaten auf lichtempfindliches Material. Die digitalen Bilddaten werden an einer Lesestation 2 empfangen. Die Lesestation weist hierfür ein Diskettenlaufwerk 3, ein CD-Laufwerk 4 und eine Netzwerkverbindung 5 auf. Zusätzlich können weitere Leseeinrichtungen für digitale Speichermedien vorgesehen sein. Des Weiteren kann im Belichter 1 ein Filmscanner integriert sein, an dem Negativfilme direkt eingelesen werden und deren Bildinformation in digitale Bilddaten umgewandelt wird. Den an der Lesestation 2 empfangenen Bilddaten werden an einer mit der Lesestation 2 in Verbindung stehenden Dateneingabestation 6 Kunden- und Auftragsdaten hinzugefügt. Die empfangenen Bilddaten werden zusammen mit den Auftragsdaten an eine Rechenstation 7, welche beispielsweise in einem PC realisiert sein kann, weitergegeben. An der Rechenstation 7 werden Korrekturen der Bilddaten vorgenommen. Zu den gängigen, bekannten Bilddaten-Korrekturverfahren gehören in diesem Zusammenhang Verschärfung, Kornunterdrückung, Kontrastkorrekturen, Randabfallskorrekturen und Rote-Augen-Korrektur sowie weitere bekannte Verfahren zur Bildverbesserung. Die korrigierten Daten werden an eine weitere Rechenstation 8 weitergeleitet, bei der Korrekturen vorgenommen werden, welche für diesen Belichter sowie das verwendete Fotopapier 9 charakteristisch sind. Durch diese Belichterkorrektur wird gewährleistet, dass die Bilddaten auf die bei der folgenden Belichtung vorherrschenden Bedingungen optimiert werden. Selbstverständlich ist es auch möglich, dass die Rechenstation 7 und 8 in einem PC zusammengefasst sind oder dass der Belichter einfacher strukturiert ist, wobei auf die Rechenstation 7 vollständig verzichtet wird und die Bilddaten im Wesentlichen so ausgegeben werden, wie sie empfangen werden, wobei lediglich eine Belichterkorrektur in der Rechenstation 8 stattfindet. Im Rahmen der Belichterkorrektur, welche in der Rechenstation 8 vorgenommen wird, wird auch das erfindungsgemäße Verfahren realisiert. Dieses wird im Detail in den folgenden Figuren erläutert. Die ausgabefertigen, korrigierten Bilddaten werden an ein Belichtungsmodul 10 weitergeleitet, an dem sie auf das Fotopapier 9 ausgegeben werden. Das Belichtungsmodul umfasst hier eine Ansteuerung 11, die dazu dient Farblaser 12 für Rot, Grün und Blau anzusteuern, so dass diese entsprechend den Bilddaten modulierte Lichtstrahlen auf ein Polygon 13 aussenden, über das die Lichtstrahlen gebündelt auf das lichtempfindliche Material treffen. Zur Bündelung der Lichtstrahlen werden nicht dargestellte optische Bauelemente wie beispielsweise eine F-Theta-Optik verwendet. Das zur Belichtung zur Verfügung zu stellende Fotopapier 9 wird einer Papierkassette 14 entnommen, von der es mittels einer Schneideeinrichtung 15 blattweise abgeschnitten wird. Zur Belichtung wird jedes der Fotopapierblätter entlang einer Transportstrecke mittels einer nicht dargestellten Transporteinheit bewegt. Diese nicht dargestellte Transporteinheit transportiert das belichtete Fotopapier 9 nach der Belichtung in eine Entwicklungsstation 16 an der das Fotopapier 9 ein Entwicklungs-, Bleich- und Fixierbad 17, 18 und 19 durchläuft. Nach der Entwicklung wird das Papier beim Durchlaufen eines nicht dargestellten Trockners getrocknet und anschließend auf einen Bandsorter 20 ausgegeben.

Wie bereits erwähnt, werden dünne Linien, welche mittels eines derartigen Belichters ausgegeben werden, insbesondere bei der Verwendung bestimmter Fotopapiere 9 verwaschen, so dass feine, auszugebende Schriften unleserlich werden können. Deshalb wird erfindungsgemäß an der Rechenstation 8 im Rahmen der Belichterkorrektur ein weiterer Korrekturschritt vorgenommen, an dem für diese Überstrahlungsproblematik charakteristische, papierspezifische Korrekturdaten in Kombination mit bilddatenspezifischen Korrekturdaten berücksichtigt werden, da herausgefunden wurde, dass die Überstrahlung sowohl abhängig von dem verwendeten Papiertyp als auch von den aufzubelichtenden Bildinhalten ist. Zur Ermittlung der papierspezifischen Korrekturdaten sind an einem nicht dargestellten Speicher digitale Bilddaten für ein Testmuster hinterlegt, welche beim Einkalibrieren eines neu zu verwendenden Papiertyps als Testausdruck aufbelichtet und entwickelt werden. Nach der Entwicklung wird das ausgegebene Testmuster an einem im Gerät integrierten Densitometer 21 ausgemessen. Die dabei ermittelten Überstrahlungswerte werden an die Rechenstation 8 für die Belichterkorrektur übergeben, wo sie zur Berechnung der papierspezifischen Korrekturdaten verwendet werden. Ebenfalls in einem nicht dargestellten Speicher abgelegt bzw. jeweils neu an der Dateneingabestation 6 eingegeben werden gewünschte maximal zulässige Sollwerte für die Überstrahlung, welche zu einem Bildergebnis führen, das eine hervorragende Wiedergabe auch für feine Schriften oder Computergraphiken mit extremen hell-dunkel Übergängen ermöglicht.

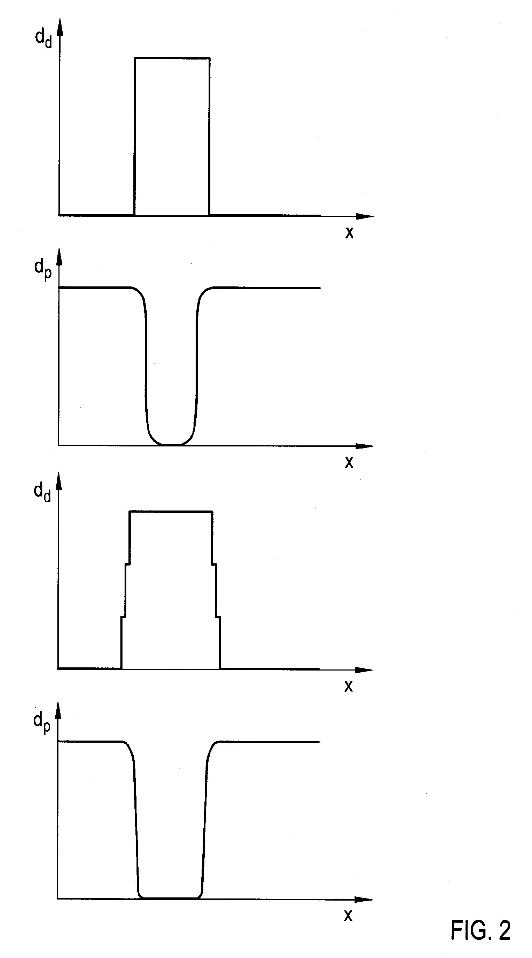

Figur 2 zeigt in vier schematischen Darstellungen jeweils ein Dichteprofil zur Erläuterung des erfindungsgemäßen Verfahrens. Das erste Dichteprofil stellt eine Dichtestufe innerhalb der Dichten der Bilddaten $d_d$ entlang einer Bildrichtung x dar. Dies ist ein Beispiel für einen Dichteverlauf innerhalb der ausgabefertigen Bilddaten, wie sie aus der Bildbearbeitung in der Rechenstation 7 und 8 kommen, falls keine Überstrahlungskorrektur erfolgte. In der zweiten Darstellung ist schematisch aufgezeigt, wie dieser Bilddaten- und Dichteverlauf $d_d$ nach der Belichtung als Papierdichteverlauf $d_p$ auf dem lichtempfindlichen Material erscheint bzw. mittels eines Mikrodensitometers erfassbar wäre. Als Belichter wird hier beispielhaft ein Laser verwendet, mit dem die Bilddaten auf Fotopapier aufbelichtet werden. Durch die Eigenschaften des Belichters (hier Laser, dessen Emission ein Gauß-Profil aufweist) und des Fotopapiers, erfahren die in den Bilddaten scharfen Dichtekanten eine Aufweitung. Dadurch wandert der dunkle Bildbereich in den dazwischen liegenden weißen ($d_p$ =

0) Bildbereich hinein. Ist der weiße Bildbereich sehr schmal und die Überstrahlung sehr stark, so kann es im Extremfall dazu kommen, dass der weiße Bereich völlig überstrahlt also vom Bereich höherer Dichten überlagert wird. In diesem Fall würde beispielsweise ein Linienmuster mit schmalen, weißen Zwischenräumen auf dem belichteten Bild zu einer schwarz-grauen Fläche werden. Feine Schriften würden dabei unleserlich. Dieses Problem tritt prinzipiell bei allen bekannten Belichtern für digitale Bilddaten, wie z. B. LED, LCD, DMD und Laserbelichtern auf, es ist jedoch umso stärker, je weniger scharfkantig die Bildpunkte bei der Belichtung abgebildet werden. Ferner ist es abhängig von den Eigenschaften des zu belichtenden Materials. So gibt es Fotopapiere, die extrem starke Überstrahlungseigenschaften zeigen, andere hingegen vermeiden dieses Problem fast völlig. Die dritte Darstellung zeigt eine Dichtestufe für korrigierte Bilddaten schematisch. Erfindungsgemäß wird an Dichtesprüngen, an denen ein Überstrahlen zu erwarten ist, von der Kante gewissermaßen das vor der Belichtung abgeschnitten, was bei der Belichtung als Überstrahlung anschließend hinzugefügt wird. Der zu erwartende Überstrahlungsfehler wird also (anhand vorermittelter Überstrahlungseigenschaften des Belichters und Dichtestruktur der Bilddaten) vorbestimmt und in die auszugebenden Bilddaten eingerechnet. Bei der anschließenden Belichtung ergibt sich nach der Korrektur das in der Darstellung vier gezeigte Dichteverhalten auf dem belichteten Papier. Eine Überstrahlung der Bilddaten erfolgt an der Dichtestufe zwar weiterhin, da die Bilddaten aber bereits um die zu erwartende Aufweitung reduziert wurden, ergibt sich nach der Überstrahlung wieder der originale Dichteverlauf. Dieser entspricht wiederum nahezu den auszugebenden Bilddaten, welche in der Darstellung eins zu sehen sind.

Die Korrekturdaten, welche zum Korrigieren der zu erwartenden Überstrahlung benutzt werden, setzen sich aus einem bilddatenspezifischen und einem papierspezifischen Anteil zusammen. Der bilddatenspezifische Anteil der Korrekturdaten beschreibt im Wesentlichen Lage und Umfang von Dichtestufen innerhalb jeweils eines Farbauszugs der Bilddaten. Für diese bilddatenspezifischen Korrekturdaten zur Ermittlung dieser Dichtestufen wird ein Hochpassfilter mit einer Reichweite von fünf Bildpunkten verwendet. Um die notwendige Rechenkapazität gering zu halten, ist dies ein eindimensionaler Filter, der zuerst in x-Richtung angewandt wird. Anschließend werden die in x-Richtung gefilterten und korrigierten Daten in y-Richtung gefiltert und korrigiert. Die in einer Dimension ermittelten bilddatenspezifischen Korrekturdaten entsprechen also im Wesentlichen dem Ergebnis einer Hochpassfilterung der ausgabefertigen Bilddaten in Zeilenrichtung. Zur Optimierung der bilddatenspezifischen Korrekturdaten kann dieses Filterergebnis mit einer Kennlinie beaufschlagt werden, welche die Einbeziehung nicht linearer Effekte zulässt.

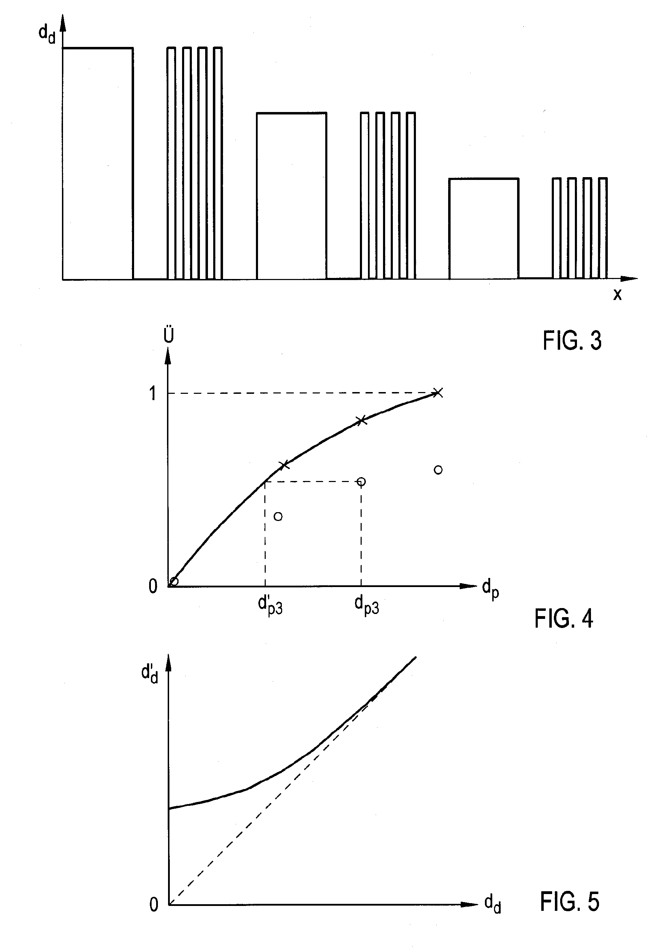

Die Bestimmung der papierspezifischen Korrekturdaten erfolgt anhand eines Testmusters, welches auf Fotopapier ausbelichtet, entwickelt und mittels eines Densitometers vermessen wird. Ein Beispiel für ein geeignetes Testmuster ist im Schnitt in Zeilenrichtung x in Figur 3 dargestellt. Es weist für unterschiedlich hohe Dichtestufen jeweils Vollflächen als Referenzwerte auf. Anhand dieser kann die Dichte ermittelt werden, welche sich bei der Belichtung einer über mehrere Bildpunkte schwarzen Fläche auf dem Fotopapier ergeben würde. Daraus kann die integrale Dichte abgeleitet werden, welche sich beispielsweise dann ergäbe, wenn nur die Hälfte aller Bildpunkte innerhalb der Fläche schwarz wären, die andere Hälfte weiß. Die dabei zu erwartende, als Referenzwert dienende, integrale Dichte wird festgehalten. Zum Ermitteln des Überstrahlungswertes befinden sich auf dem Testmuster dunkle Linien mit derselben maximalen Dichte wie die entsprechende Vollfläche. Dieses Linienmuster besteht aus jeweils einer Hälfte von dunklen und weißen Bildpunkten, so dass als deren integrale Dichte bei fehlender Überstrahlung die Hälfte des Wertes der Vollfläche ermittelt werden müßte. Hierbei ist jedoch zu berücksichtigen, dass die weiße Fläche nicht vollständig weiß ist, sondern ein gewisser Mindestwert für den Papierschleier ermittelt werden muss, welcher sowohl vom integralen Dichtewert der Vollfläche als auch von dem des Linienmusters abgezogen werden muss. Tritt nun Überstrahlung bei der Belichtung auf, so findet sich im wiedergegebenen Linienmuster zwischen den dunklen Bildpunkten kein Weiß-sondern ein Grauton, der die integrale Dichte erhöht. Um ein Maß für diese Überstrahlung zu erhalten, wird also der Anteil der gemessenen integralen Dichte der Vollfläche als Referenzwert gebildet, der dem entspricht, den die Bilddatendichte des Linienmusters gegenüber der Vollfläche hat. Stimmt dieser mit der für das Linienmuster ermittelten integralen Dichte überein, so erfolgte keine Überstrahlung. Überschreitet jedoch die gemessene integrale Dichte des Linienmusters den Referenzwert, so ist Überstrahlung aufgetreten. Bei maximaler Überstrahlung entspricht die gemessene integrale Dichte des Linienmusters im schlimmsten Fall der gesamten integralen Dichte der Vollfläche. In diesem Fall wären die Linien im belichteten Bild ausgefüllt.

Die am Densitometer für die verschiedenen Dichtestufen des Testmusters ermittelten Überstrahlungswerte werden interpoliert, so dass sich eine Istwert-Überstrahlungskennlinie ergibt. Dies ist in Figur 4 schematisch dargestellt. Hier stehen die Kreuze für die gemessenen Überstrahlungswerte Ü, welche gegen die Papierdichte dp aufgetragen sind. Als Korrekturvorgabe werden bei den entsprechenden Dichten Sollwerte für eine akzeptable Überstrahlung festgelegt. Diese sind beispielhaft in Figur 4 als Kreise eingetragen. Zur Ermittlung der papierspezifischen Korrekturkennlinie wird nun eine Abbildungsvorschrift f ermittelt, welche die Sollwerte auf die Istwert-Überstrahlungskennlinie abbildet. Diese Funktion f bildet jeweils die Dichte d auf die entsprechende Solldichte d' ab. In Figur 4 ist dies am Beispiel einer der im Testmuster vorgegebenen Dichte $d_{ps}$ gezeigt. Die Dichte $d_{p3}$' ergibt sich dadurch, dass die Sollwert-Überstrahlung der Dichte $d_{p3}$ auf die Istwert-Überstrahlungskennlinie abgebildet wird. Es gilt also

$$f(d_p) = d_p'.$$

Da diese Zuordnung jedoch bezogen auf die Papierdichten $d_p$ erfolgt, die Korrektur am Belichter aber an den Dichten der Bilddaten $d_d$ vorgenommen werden muss, ist noch die Ermittlung der Zuordnung von Papierdichten $d_p$ zu Bilddatendichten $d_d$ notwendig. Diese Abbildungsvorschrift

$$g(d_d) = d_p$$

wird abgeleitet mittels einer Interpolation der gemessenen Dichten aus dem belichteten Testmuster zur Kennlinie. Damit ergibt sich die Sollausgabedichte $d_p$' aus der Abbildung

$$f(g(d_d)) = d_p'.$$

Schließlich wird die Funktion h ermittelt, welche gewissermaßen als Inverse der Funktion g den Ausgabedichten $d_p$' die Bilddatendichten $d_d$' zuordnet. Für die Funktion h gilt dann

$$h(d_p') = d_d'.$$

Fasst man all diese ermittelten Abbildungsvorschriften zusammen, so ergibt sich die Abbildung

$$h(f(g(d_d))) = d_d',$$

also die Überstrahlungskorrekturfunktion, welche den zu korrigierenden ausgabefertigen Bilddatendichten $d_d$ die überstrahlungskorrigierten Dichten $d_d$' zuordnet. Dies ist in Figur 5 als Kennlinie dargestellt.

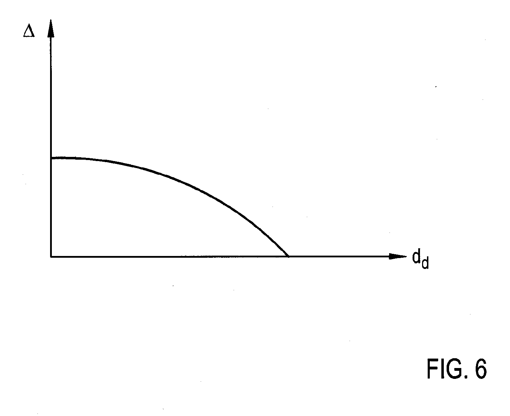

Die papierspezifische Korrekturkennlinie Δ ergibt sich schließlich aus der Differenz zwischen $d_d$ und $d_d$'. Sie ist in Figur 6 dargestellt und zeigt die größte Korrektur bei kleinen Dichten der Bilddaten $d_d$, das heißt bei großen Printdichten $d_p$.

Für die Überstrahlungskorrektur werden nun papierspezifische Korrekturkennlinien und bilddatenspezifische Korrekturdaten, also das Ergebnis der Hochpassfilterung, miteinander verrechnet. Hieraus resultieren schließlich die überstrahlungskorrigierten, ausgabefertigen Bilddaten, welche an den Belichter übergeben werden.

Die Berechnung der Korrekturdaten wurde hier anhand eines Verfahrens beispielhaft dargestellt. Es lassen sich hier jedoch beliebige andere Verfahren entwickeln, welche die Differenz zwischen Überstrahlungs-, Ist- und Sollwert anhand von vorgegebenen Werten und auszumessenden Testmustern ermitteln. Auch die Wahl der Testmuster bietet Gestaltungsspielraum.

**Patentansprüche**

1. Verfahren zum Belichten digitaler Bilddaten auf lichtempfindliches Material, wobei die Bilddaten an einer Lesestation empfangen werden, in einer Rechenstation eine Belichterkorrektur auf die Bilddaten angewandt wird und die belichtungskorrigierten Bilddaten über ein Belichtungsmodul auf das lichtempfindliche Material ausgegeben werden, **dadurch gekennzeichnet, dass** die Belichterkorrektur einen Korrekturschritt umfasst, der sowohl spezifisch für den Typ von verwendetem lichtempfindlichem Material ist als auch spezifisch für die Bilddaten.

2. Verfahren nach Anspruch 1, **dadurch gekennzeichnet, dass** der Korrekturschritt auf ausgabefertige Bilddaten angewandt wird.

3. Verfahren nach Anspruch 1 oder 2, dass der Korrekturschritt auf jede Farbe getrennt angewandt.

4. Verfahren nach Anspruch 1, 2 oder 3, **dadurch gekennzeichnet, dass** für den Korrekturschritt bilddatenspezifische Korrekturdaten verwendet werden, welche anhand einer Analyse der Bilddaten ermittelt werden.

5. Verfahren nach Anspruch 4, **dadurch gekennzeichnet, dass** die bilddatenspezifischen Korrekturdaten anhand einer Kantendetektion innerhalb der Bilddaten ermittelt werden.

6. Verfahren nach Anspruch 4, **dadurch gekennzeichnet, dass** die bilddatenspezifischen Korrekturdaten anhand einer Filterung der Bilddaten ermittelt werden.

7. Verfahren nach Anspruch 6, **dadurch gekennzeichnet, dass** ein zweidimensionaler Filter verwendet wird.

8. Verfahren nach Anspruch 6, **dadurch gekennzeichnet, dass** eindimensionale Filter verwendet und diese nacheinander in x- und y-Richtung angewandt werden.

9. Verfahren nach Anspruch 6, **dadurch gekennzeichnet, dass** Filter mit einer Reichweite von 5 Bildpunkten verwendet werden.

10. Verfahren nach Anspruch 1 oder 2, **dadurch gekennzeichnet, dass** papierspezifische Korrekturdaten anhand der Belichtung und Vermessung eines Testmusters erzeugt werden welches als Maß für eine Überstrahlung beim Belichten geeignet ist.

11. Verfahren nach Anspruch 10, **dadurch gekennzeichnet, dass** das Testmuster eine Vielzahl von aufeinanderfolgenden Dichtesprüngen aufweist.

12. Verfahren nach Anspruch 11, **dadurch gekennzeichnet, dass** die Überstrahlung aus einer integralen Messung des aufbelichteten Testmusters ermittelt wird.

13. Verfahren nach Anspruch 10 oder 11, **dadurch gekennzeichnet, dass** die papierspezifischen Korrekturdaten aus der Korrelation von gemessener und vorgegebener maximal zulässiger Überstrahlung abgeleitet werden.

14. Verfahren nach Anspruch 1 oder 2, **dadurch gekennzeichnet, dass** die papierspezifischen Korrekturdaten für jeden Typ von verwendetem lichtempfindlichen Material neu ermittelt werden.

15. Verfahren nach Anspruch 1 oder 2, **dadurch gekennzeichnet, dass** papierspezifische Korrekturdaten für bestimmte Typen lichtempfindlichen Materials vorbestimmt und abgespeichert werden.

FIG. 1

FIG. 2

FIG. 3

FIG. 4

FIG. 5

FIG. 6

Europäisches
Patentamt

**EUROPÄISCHER RECHERCHENBERICHT**

Nummer der Anmeldung

EP 03 10 0832

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 059 804 A (SHARP KK) 13. Dezember 2000 (2000-12-13) * Absätze [0003]-[0016] * * Absätze [0048]-[0088]; Abbildungen 8,9,6,11,12 * --- | 1-15 | H04N1/407 H04N1/40 |
| X | EP 0 961 487 A (CANON KK) 1. Dezember 1999 (1999-12-01) * Absätze [0011]-[0051]; Abbildungen 1-11 * --- | 1-10,14, 15 | |
| X | US 4 729 016 A (ALKOFER JAMES) 1. März 1988 (1988-03-01) * Zusammenfassung * --- | 1 | |
| A | WO 99 23605 A (IMATION CORP) 14. Mai 1999 (1999-05-14) * Seite 3, Zeile 26 - Seite 4, Zeile 17 * ----- | 10-14 | |

RECHERCHIERTE
SACHGEBIETE (Int.Cl.7)

H04N

Der vorliegende Recherchenbericht wurde für alle Patentansprüche erstellt

| Recherchenort | Abschlußdatum der Recherche | Prüfer |
|---|---|---|
| DEN HAAG | 15. August 2003 | Hardell, A |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 03 10 0832

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1059804 | A | 13-12-2000 | JP | 2000343756 A | 12-12-2000 |
| | | | EP | 1059804 A2 | 13-12-2000 |
| | | | US | 6417876 B1 | 09-07-2002 |
| EP 0961487 | A | 01-12-1999 | JP | 2000050097 A | 18-02-2000 |
| | | | EP | 0961487 A2 | 01-12-1999 |
| US 4729016 | A | 01-03-1988 | DE | 3672348 D1 | 02-08-1990 |
| | | | EP | 0221929 A1 | 20-05-1987 |
| | | | JP | 62500753 T | 26-03-1987 |
| | | | WO | 8606907 A1 | 20-11-1986 |
| WO 9923605 | A | 14-05-1999 | DE | 69813867 D1 | 28-05-2003 |
| | | | EP | 1027679 A1 | 16-08-2000 |
| | | | JP | 2002503562 T | 05-02-2002 |
| | | | WO | 9923605 A1 | 14-05-1999 |

Für nähere Einzelheiten zu diesem Anhang : siehe Amtsblatt des Europäischen Patentamts, Nr.12/82